# EUROPEAN PATENT APPLICATION

(11) **EP 3 270 023 A1**
(43) Date of publication of application: **17.01.2018**
(21) Application number: 17174375.0
(22) Date of filing: 02.06.2017
(51) Int. Cl.: F16K 37/00, F16K 1/00, F16K 31/122

(54) **VALVE ASSEMBLY**

(30) Priority: 02.06.2016 GB 201609682
(71) Applicant: Fort Vale Engineering Limited, Burnley, Lancashire BB12 7ND (GB)
(72) Inventor: BAILEY, David, Simonstone, Lancashire BB12 7NR (GB)
(74) Representative: WP Thompson

(57) **Abstract**

A valve assembly (10) comprises a valve seat (44), a valve closure member (46) that is releasably engageable with the valve seat (44) and displacement means such as a push rod (60) for displacing the valve closure member (46) from the valve seat (44). The displacement means (60) is moveable between a first position in which the valve closure member (46) is permitted to engage the valve seat (44), and a second position in which the valve closure member (46) is displaced from the valve seat (44). The valve assembly further comprises indicator means (104) mechanically linked to the displacement means and configured to provide a visual indication of the position of the displacement means.

## Description

The present invention relates to valve assemblies and in particular, but not exclusively, to valve assemblies for controlling the discharge of material from a container.

A valve for discharging material is from a container, typically referred to as a "footvalve", is mounted at the lowermost point of the container and typically takes the form of a poppet valve which is urged towards engagement with a valve seat by means of a strong compression spring. In order to open the valve, the poppet valve can be lifted out of engagement with its valve seat by moving a "finger" which is in abutment with the downstream face of the poppet valve. The finger is typically displaced by means of a manually-operated linkage against the restoring force of the compression spring in order to displace the poppet valve from the valve seat and allow material to be discharged.

With such valves, the position of the manually-operated linkage provides a very reliable indication as to whether the valve is open or closed. However, in some circumstances the manually-operated linkage is replaced with an externally-powered mechanism, typically a hydraulic actuator. This allows the valve to be controlled remotely and removes the requirement for manual effort to open the valve, which can be considerable. An externally-powered valve is also useful in circumstances where the valve is not readily accessible by an operator.

However, when an externally-powered mechanism is used to control the valve, it is difficult for an operator to be certain as to whether the valve is open or closed. Indication of the valve open or closed position is commonly achieved by displacing the fluid due to the movement of hydraulic cylinder. This fluid in turn pressurises signal cylinders that identify the valve position. The circuit for the displaced indicator fluid is a sealed loop which can leak, with the result that it would be possible for a signal to be given to open the valve but for the valve indication to remain in the closed position. There will normally be no obvious external indication as to whether the valve is open or closed and it would normally be difficult to readily determine the position of the externally-powered mechanism, resulting in a dangerous situation.

It is an object of the present invention to provide a valve assembly which overcomes or reduces the problems associated with the prior art.

In accordance with the present invention, a valve assembly comprises a valve seat, a valve closure member releasably engageable with the valve seat and displacement means for displacing the valve closure member from the valve seat, movable between a first position in which the valve closure member is permitted to engage the valve seat and a second position in which the valve closure member is displaced from the valve seat, the valve assembly further comprising indicator means mechanically linked to the displacement means and configured to provide a visual indication of the position of the displacement means.

By providing an indicator means which is mechanically linked to the displacement means, which provides a visual indication of the position of the displacement means, an operator can readily and reliably determine whether the valve assembly is open or closed.

In a preferred embodiment, the displacement means comprises a powered actuator.

The displacement means may be movable by means of pressurised fluid. For example, the displacement means may be movable hydraulically or pneumatically.

In one embodiment, displacement means comprises a piston displaceable by means of pressurised fluid.

Preferably, indicator means is mechanically linked to the piston.

Preferably, the piston comprises a rack portion and the indicator means comprises gear means engaged with the rack portion.

The rotational position of the gear means preferably corresponds to the position of the piston, and therefore to the position of the valve closure member.

The valve assembly may further comprise an engagement member extending between the piston and the valve closure member.

Preferably, the engagement member is elongate.

The engagement member may comprise a rod in abutment with the piston and the valve closure member.

The valve assembly may further comprise a valve inlet, a valve outlet and a passage extending between the valve inlet and the valve outlet, wherein the engagement member projects into the passage.

Preferably, the engagement member is located in an enclosure which projects into the passage.

Preferably, the indicator means comprises a mechanical linkage.

The indicator means may comprise an indicator member displaceable between a first position corresponding to the first position of the displacement means and a second position corresponding to the second position of the displacement means.

The indicator means may be pivotable between its first and second positions.

The valve assembly may further comprise biasing means, e.g. spring means, for biasing the valve closure member towards engagement with the valve seat.

By way of example only, a specific embodiment of the present invention will now be described with reference to the accompanying drawings, in which:
Figure 1 is a perspective view of an embodiment of valve assembly in accordance with the present invention;
Figure 2 is a side view of the valve assembly of Figure 1, looking in the direction of arrow II;
Figure 3 is a side view of the valve assembly of Figure 1, looking in the direction of arrow III;
and
Figure 4 is a vertical cross-section through the valve assembly of Figure 1.

The valve assembly 10 shown in the Figures comprises a cast stainless steel valve body 12 having a circular inlet port 14 in its upper face and a circular outlet port 16. The inlet port 14 and outlet port 16 of connected by a through passage 18 by means of which fluid flowing downwardly into the valve body 12 through the inlet port 14 is diverted through 90° to the outlet port 16. A generally square securing flange 20 extends outwardly from the inlet port 14 and is provided with four apertures 22, one at each corner, for receipt of securing bolts 24 which are screw-threadedly received in corresponding threaded recesses in a tank pad 26 of a container (not shown) to which the valve assembly is to be secured.

The periphery of the inlet port 14 is formed into an upstanding annular rim 28 which is sealingly received in a corresponding annular recess 30 in the undersurface of an annular valve seat member 29. The valve seat member 30 is sealingly received in a central circular aperture 32 of the tank pad 26 and is secured to the tank pad by means of four bolts 38, each passing through an aperture in a respective outwardly projecting securing lug 40, and screw-threadedly received in a corresponding threaded recess 42 in the undersurface of the tank pad 26.

The valve seat member 30 comprises an annular, frusto-conical valve seat 44 and a circular poppet valve 46 is releasably and sealingly engageable with the valve seat 44. The poppet valve 46 is urged downwardly, towards sealing engagement with the valve seat 44, by means of a strong compression spring 48 extending between the rear face of the poppet valve 46 and a spring top plate 50 which is mounted at the upper end of four identical securing posts 52, the opposite ends of the securing posts 52 being screw-threadedly received in corresponding recesses in the upper face of the valve seat member 30. A guide post 54 extends perpendicularly from the rear face of the poppet valve 46 and passes through a complementarily-shaped aperture 56 in the spring top plate 50, in order to guide the movement of the poppet valve 46.

The poppet valve 46 is displaceable out of engagement with the valve seat 44, against the restoring force of compression spring 48, by means of an elongate push rod 60. The elongate pushrod 60 has an enlarged head 62 at its upper end which is received in a recess 64 in the undersurface of the poppet valve 46. The push rod 60 is disposed in a tube 65 which passes through the wall of the valve housing and extends to a position just below the undersurface of the poppet valve 46 when the valve is engage with the valve seat 44. The annular gap between the push rod 60 and the tube 64 is filled with a stack of packing washers 66 to prevent ingress of material from the container when the poppet valve 46 is displaced from the valve seat 44.

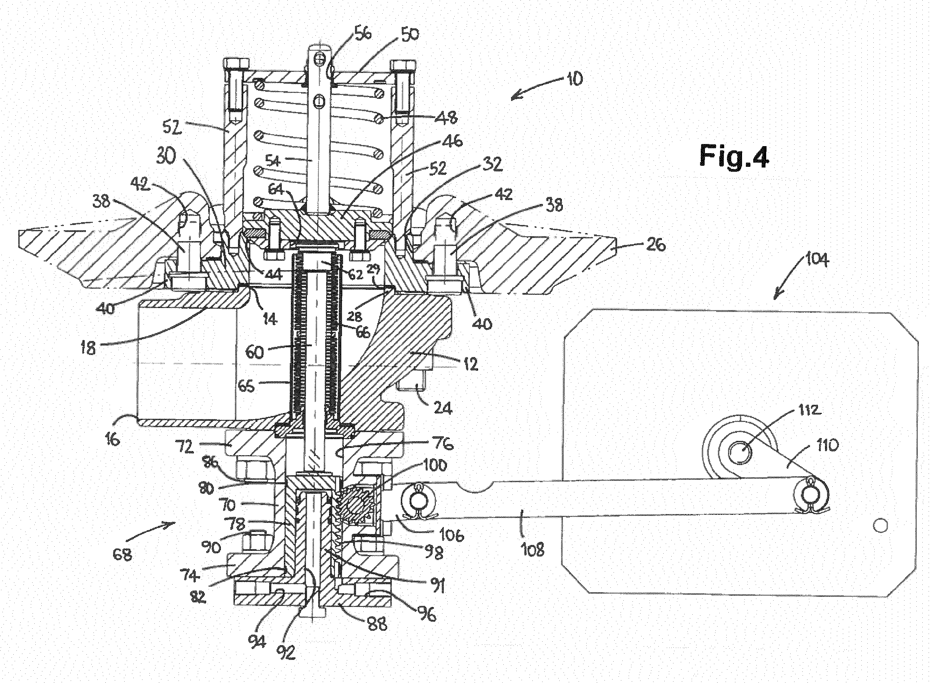

The push rod 60 is displaceable by means of a hydraulic actuator 68 which is secured to the undersurface of the valve body 12. The hydraulic actuator 68 comprises a generally tubular body 70 having upper and lower annular securing flanges 72, 74. A cylindrical bore 76 extends longitudinally through the tubular body 70, within which a hollow elongate piston 78 is slidably disposed. Annular seals 80, 82 at the upper and lower ends of the piston ensure that the piston 78 is also sealingly disposed within the cylindrical bore 76. As best seen in Figure 4, the upper end of the piston 78 engages the lower end of the push rod 60.

The hydraulic actuator 68 is secured to the valve body 12 by means of four identical securing bolts 86 and a hydraulic connection head 88 is secured to the undersurface of the lower securing flange 74 by means of six identical securing bolts 90. The hydraulic connection head 88 comprises a tubular nozzle portion 91 which is slidably and sealingly received within the rear face of the hollow elongate piston 78. The nozzle portion 91 has a longitudinally extending through passage 92 which communicates with an inlet bore 94 to which a source of pressurised air (not shown) is connected, in use, in order to displace the piston 78, as will be explained. An outlet port 96 is also in communication with the outer surface of the piston 78.

As best seen in Figure 4, one side of the outer surface of the piston 78 is provided with a longitudinally-extending toothed rack portion 98, which is in meshing engagement with a pinion 100 which is rotatably mounted on the body of the hydraulic actuator 68, whereby movement of the piston 78 along the cylindrical bore 76 causes the pinion 100 to rotate.

As shown in the Figures, the pinion is connected to an output shaft 102, which is in turn connected to an indicator device indicated generally at 104. The output shaft 102 is connected to a short crank arm 106 which is pivotally connected to one end of a connecting rod 108. The opposite end of the connecting rod 108 is in turn pivotally connected to one end of a short further connecting rod 110, the opposite end of which is fixedly connected to a pivotable indicator rod 112 extending parallel to the output shaft 102. Each of the two ends of the indicator rod 112 is provided with an indicator finger 114 and a condition indicating plate 116 is also provided at each end of the indicator rod 112. Displacement of the piston 78 results in rotation of the output shaft 102, which in turn causes the indicator rod 112 to pivot, by means of which the indicator fingers 114 indicate the condition of the valve, as will be explained.

In use, the valve assembly is secured to the tank pad 26 of a container (not shown), as described previously. In the absence of hydraulic pressure applied to inlet port 94, the poppet valve 46 is held in sealing engagement with the valve seat 44 by means of the compression spring 48. When the valve assembly is in the closed condition, as illustrated in the Figures, the pinion 100 is engaged with the uppermost portion of the toothed rack portion 98 on the outer surface of the piston 78. As a result, the crank 106 and connecting rod 108 lie in an approximately horizontal position, as indicated in the Figures, as a result of which the indicating fingers 114 indicate to an observer that the valve is closed.

When it is desired to discharge material from the container to which the valve assembly is fitted, hydraulic pressure is applied to the inlet port 94 of the hydraulic actuator 68. If the force applied to the piston 78 exceeds the restoring force applied by the compression spring 48, the piston 78 moves upwardly. As a consequence, the push rod 60 is also displaced upwardly. Since the upper end 62 of the push rod 60 engages the undersurface of the poppet valve 46, the poppet valve 46 is lifted from the valve seat 44 and material passes from the container into the valve body 12 via the inlet 14, through the valve passage 18 and out of the valve body 12 via the outlet 16.

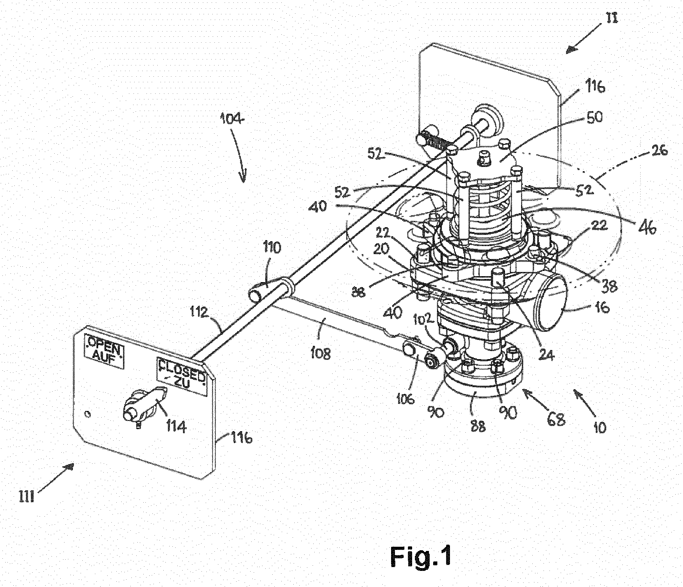

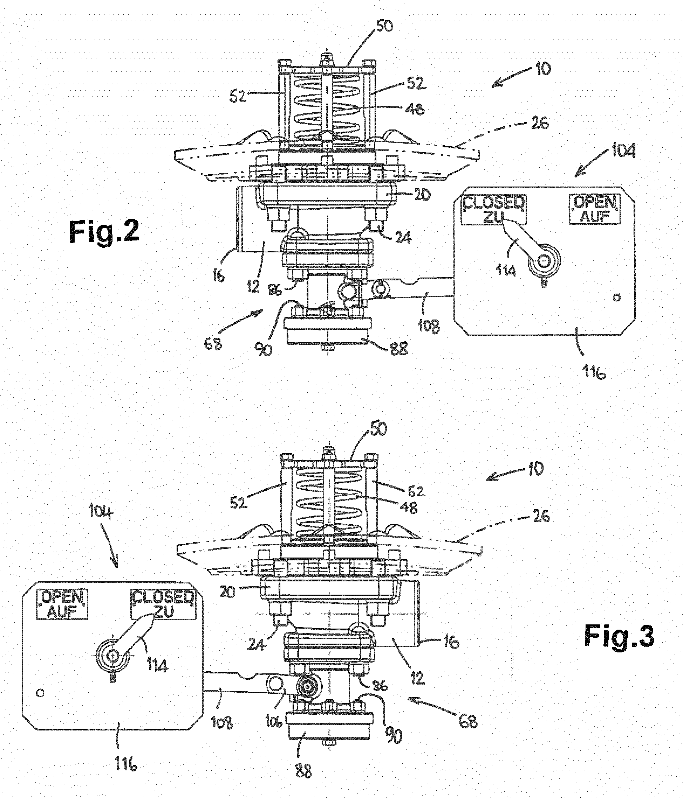

As the piston 78 is displaced upwardly, the pinion 100 is rotated by its engagement with the rack portion 98 (in an anticlockwise direction as shown in Figures 1 and 3 and in a clockwise direction as shown in Figures 2 and 4). As a consequence, the connecting rod 108 is pulled towards the valve assembly (to the right as shown in Figures 1 and 3 and to the left as shown in Figures 2 and 4). This in turn causes the indicator fingers 114 to be pivoted to the alternative position, to indicate that the valve is open.

When sufficient material has been discharged from the container, the hydraulic pressure is removed from inlet port 94. This allows the compression spring 48 to reseat the poppet valve 46 on the valve seat 44. Reseating of the valve 44 on the valve seat 44 results in downward displacement of the push rod 60 which in turn displaces the piston 78 to its outermost position, as illustrated in Figure 4. Displacement of the piston 78 downwardly causes the crank arm 106 and connecting rod 108 to be displaced in the opposite direction, to the position is indicated in Figures 1 to 4, which results in the indicating fingers 114 returning to the illustrated positions, in which they indicate that the valve is closed.

The invention is not restricted to details of the foregoing embodiment.

## Claims

1. A valve assembly (10) comprising a valve seat (44), a valve closure member (46) releasably engageable with the valve seat (44) and displacement means for displacing the valve closure member (46) from the valve seat (44), movable between a first position in which the valve closure member (46) is permitted to engage the valve seat (44) and a second position in which the valve closure member (46) is displaced from the valve seat (44), **characterised in that** the valve assembly further comprises indicator means (104) mechanically linked to the displacement means and configured to provide a visual indication of the position of the displacement means.

2. A valve assembly as claimed in claim 1, wherein the displacement means comprises a powered actuator (68).

3. A valve assembly as claimed in claim 2, wherein the displacement means is movable by means of pressurised fluid.

4. A valve assembly as claimed in claim 3, wherein the displacement means is movable hydraulically.

5. A valve assembly as claimed in claim 3 or claim 4, wherein the displacement means comprises a piston (78) displaceable by means of pressurised fluid.

6. A valve assembly as claimed in claim 5, wherein the indicator means (104) is mechanically linked to the piston (78).

7. A valve assembly as claimed in claim 6, wherein the piston (78) comprises a rack portion (98) and wherein the indicator means (104) comprises gear means (100) engaged with the rack portion (98).

8. A valve assembly as claimed in claim 7, wherein the rotational position of the gear means (100) corresponds to the position of the piston (78).

9. A valve assembly as claimed in any of claims 5 to 8, further comprising an engagement member extending between the piston (78) and the valve closure member (46) and, optionally,
wherein the engagement member is elongate.

10. A valve assembly as claimed in claim 9, wherein the engagement member comprises a rod (60) in abutment with the piston (78) and the valve closure member (46).

11. A valve assembly as claimed in claim 10, further comprising a valve inlet (14), a valve outlet (16) and a passage (18) extending between the valve inlet (14) and the valve outlet (16), wherein the engagement member projects into the passage (18) and, optionally,
wherein the engagement member is located in an enclosure (65) which projects into the passage (18).

12. A valve assembly as claimed in any of the preceding claims, wherein the indicator means (104) comprises a mechanical linkage.

13. A valve assembly as claimed in any of the preceding claims, wherein the indicator means (104) comprises an indicator member (114) displaceable between a first position corresponding to the first position of the displacement means and a second position corresponding to the second position of the displacement means, and, optionally,
wherein the indicator means (104) is pivotable between its first and second positions.

14. A valve assembly as claimed in any of the preceding claims, further comprising biasing means for biasing the valve closure member (46) towards engagement with the valve seat (44).

15. A valve assembly as claimed in claim 14, comprising spring means (48) for biasing the valve closure member (46) towards engagement with the valve seat (44).
